# EUROPÄISCHE PATENTSCHRIFT

(11) **EP 3 270 603 B1**
(45) Veröffentlichungstag und Bekanntmachung des Hinweises auf die Patenterteilung: **06.01.2021**
(21) Anmeldenummer: 16179525.7
(22) Anmeldetag: 14.07.2016
(51) Int. Cl.: H04Q 9/00

(54) **DETEKTIONSVORRICHTUNG ZUM DETEKTIEREN EINER PHYSIKALISCHEN GRÖSSE**
DETECTION DEVICE TO DETECT A PHYSICAL QUANTITY
DISPOSITIF DE DÉTECTION D'UNE GRANDEUR PHYSIQUE

(43) Veröffentlichungstag der Anmeldung: 17.01.2018
(73) Patentinhaber: Deutsche Telekom AG, 53113 Bonn (DE)
(72) Erfinder: Neubacher, Andreas, A-2100 Korneuburg (AT)
(74) Vertreter: Braun-Dullaeus Pannen Emmerling Patent- & Rechtsanwaltspartnerschaft mbB

(56) Entgegenhaltungen:
- EP-A1- 2 685 744
- US-B1- 6 611 755
- Joannes I Laveyne ET AL: "Wireless synchronisation for low cost wireless sensor networks using DCF77", , 7 July 2014 (2014-07-07), pages 1-5, XP055476975, Retrieved from the Internet: URL:https://biblio.ugent.be/publication/56 38924/file/5638966.pdf [retrieved on 2018-05-18]

## Beschreibung

### TECHNISCHES GEBIET

Die vorliegende Erfindung betrifft das Gebiet der Detektion einer physikalischen Größe und der Übertragung von Daten, welche die physikalische Größe repräsentieren, über ein Kommunikationsnetzwerk.

### TECHNISCHER HINTERGRUND

Unter dem Begriff des Internets der Dinge (engl. Internet of Things, loT) wird die Vernetzung physikalischer Objekte über ein Kommunikationsnetzwerk verstanden, wodurch beispielsweise eine effizientere Überwachung der physikalischen Objekte und ein Austausch von Informationen über die physikalischen Objekte ermöglicht wird.

Das Internet der Dinge ist insbesondere im Bereich der Hausautomatisierungstechnik und Industrieautomatisierungstechnik von zunehmender Bedeutung, wobei unterschiedliche physikalische Größen, wie beispielsweise eine Temperatur oder ein Energieverbrauch, effizient detektiert werden sollen. Im Bereich der Hausautomatisierungstechnik werden beispielsweise Heizungssensoren zur Abrechnung der Heizungskosten zunehmend mit entsprechender Funktionalität ausgestattet. Im Bereich der Industrieautomatisierung sollen beispielsweise Produktionsabläufe optimiert und effizienter durchgeführt werden. Entsprechende Ansätze hierfür werden zumeist unter dem Begriff der Industrie 4.0 zusammengefasst.

Zur Detektion der physikalischen Größe sowie zur Übertragung der Daten, welche die physikalische Größe repräsentieren, werden üblicherweise kostengünstige Geräte eingesetzt. Der Zugriff auf den Kommunikationskanal wird dabei typischerweise nicht mittels komplexer Verfahren zur Medienzugriffssteuerung (engl. Media Access Control, MAC) gesteuert. Die Daten, welche die physikalische Größe repräsentieren, werden daher zumeist unkoordiniert ausgesendet. Dies kann jedoch zu Kollisionen und Verlusten von Daten auf dem Kommunikationskanal führen.

In EP 2 685 744 A1 ist ein Verfahren zum Allokieren von Zeitschlitzen für Sensorknoten in einem drahtlosen Sensorknotennetzwerk im Bereich der industriellen Prozesssteuerung beschrieben, wobei die Zeitschlitze in einem übergeordneten Superrahmen angeordnet sind.

In J. I. Laveyne et al., "Wireless synchronisation for low cost wireless sensor networks using DCF77", XP055476975, ist ein drahtloses Sensornetzwerk beschrieben, welches ein DCF77 Zeitsignal zur Synchronisation von Endknoten verwendet.

### BESCHREIBUNG DER ERFINDUNG

Es ist daher die Aufgabe der vorliegenden Erfindung, ein effizientes Konzept zur Medienzugriffssteuerung auf einem Kommunikationskanal zu schaffen.

Diese Aufgabe wird durch die Merkmale der unabhängigen Ansprüche gelöst. Vorteilhafte Ausführungsformen der Erfindung sind Gegenstand der Beschreibung, der Zeichnungen sowie der abhängigen Ansprüche.

Die vorliegende Erfindung basiert auf der Erkenntnis, dass die obige Aufgabe durch eine Detektionsvorrichtung gelöst werden kann, in welcher ein Kommunikationsprofil der Detektionsvorrichtung abgelegt ist, wobei das Kommunikationsprofil zumindest einen vorbestimmten Sendezeitpunkt zum Aussenden der Daten definiert. Ferner kann durch das Kommunikationsprofil eine vorbestimmte Sendeperiodendauer definiert werden, auf deren Grundlage eine periodische Aussendung der Daten erfolgen kann.

Die Detektionsvorrichtung kann über ein Kommunikationsnetzwerk mit einer Serverentität kommunizieren, welche die vorbestimmten Sendezeitpunkte einer Gruppe von Detektionsvorrichtungen verwalten kann. Das Kommunikationsprofil einer Detektionsvorrichtung kann zudem über das Kommunikationsnetzwerk durch die Serverentität aktualisiert werden.

Dadurch wird erreicht, dass ein Zugriff der Gruppe von Detektionsvorrichtungen auf den Kommunikationskanal effizient gesteuert werden kann und zugleich eine kostengünstige Implementierung der einzelnen Detektionsvorrichtungen möglich wird.

Gemäß einem ersten Aspekt betrifft die Erfindung eine Detektionsvorrichtung zum Detektieren einer physikalischen Größe gemäß Anspruch 1.

Dadurch wird der Vorteil erreicht, dass ein effizientes Konzept zur Medienzugriffssteuerung auf einem Kommunikationskanal realisiert werden kann.

Die Zielnetzwerkadresse kann eine Internet Protocol (IP) Adresse, beispielsweise eine IPv4-Adresse oder eine IPv6-Adresse, sein.

Gemäß einer Ausführungsform ist der Detektor ausgebildet, eine Temperatur, eine Feuchtigkeit, eine Energie, eine Leistung, eine Position, eine Geschwindigkeit, eine Beschleunigung, einen Winkel, eine Winkelgeschwindigkeit, eine Winkelbeschleunigung, eine Drehzahl, eine Kraft, ein Drehmoment, einen Energieverbrauch, einen Wasserverbrauch, einen Wärmeverbrauch oder einen Kraftstoffverbrauch als physikalische Größe zu bestimmen. Der Detektor kann hierfür einen Sensor zum Bestimmen der physikalischen Größe umfassen. Dadurch wird der Vorteil erreicht, dass physikalische Größen, welche im Bereich der Heimautomatisierungstechnik sowie im Bereich der Industrieautomatisierungstechnik von Bedeutung sind, effizient bestimmt werden können.

Gemäß einer Ausführungsform definiert der vorbestimmte Sendezeitpunkt einen Beginn eines freien Sendezeitschlitzes, wobei der freie Sendezeitschlitz eine vorbestimmte Sendezeitschlitzdauer aufweist, und wobei die Kommunikationsschnittstelle ausgebildet ist, die Daten innerhalb des freien Sendezeitschlitzes auszusenden. Dadurch wird der Vorteil erreicht, dass ein Sendezeitschlitz für die Übertragung der Daten eingesetzt werden kann.

Gemäß einer Ausführungsform definiert das Kommunikationsprofil ferner eine vorbestimmte Sendeperiodendauer, wobei die vorbestimmte Sendeperiodendauer eine zeitliche Differenz zwischen einem weiteren vorbestimmten Sendezeitpunkt und dem vorbestimmten Sendezeitpunkt anzeigt, und wobei die Kommunikationsschnittstelle ferner ausgebildet ist, die Daten zu dem weiteren vorbestimmten Sendezeitpunkt auszusenden. Dadurch wird der Vorteil erreicht, dass eine periodische Aussendung der Daten realisiert werden kann.

Gemäß einer Ausführungsform definiert der weitere vorbestimmte Sendezeitpunkt einen Beginn eines weiteren freien Sendezeitschlitzes, wobei der weitere freie Sendezeitschlitz die vorbestimmte Sendezeitschlitzdauer aufweist, und wobei die Kommunikationsschnittstelle ausgebildet ist, die Daten innerhalb des weiteren freien Sendezeitschlitzes auszusenden. Dadurch wird der Vorteil erreicht, dass ein weiterer Sendezeitschlitz für die Übertragung der Daten eingesetzt werden kann.

Gemäß einer Ausführungsform ist der Detektionsvorrichtung eine vorbestimmte Identitätskennung zugeordnet, wobei der Detektor ausgebildet ist, die Daten mit der vorbestimmten Identitätskennung zu verknüpfen, und wobei die Kommunikationsschnittstelle ausgebildet ist, die Daten mit der vorbestimmten Identitätskennung zu dem vorbestimmten Sendezeitpunkt auszusenden. Dadurch wird der Vorteil erreicht, dass die ausgesendeten Daten der Detektionsvorrichtung, beispielsweise durch eine Serverentität, effizient zugeordnet werden können.

Die vorbestimmte Identitätskennung kann der Detektionsvorrichtung bei deren Herstellung fest zugeordnet werden. Die vorbestimmte Identitätskennung kann beispielsweise eine Media Access Control (MAC) Adresse oder eine International Mobile Station Equipment Identity (IMEI) Nummer sein, welche der Detektionsvorrichtung zugeordnet ist.

Gemäß einer Ausführungsform ist der Detektionsvorrichtung eine Netzwerkadresse zugeordnet, wobei die vorbestimmte Identitätskennung der Detektionsvorrichtung die Netzwerkadresse der Detektionsvorrichtung ist. Dadurch wird der Vorteil erreicht, dass die ausgesendeten Daten der Detektionsvorrichtung, beispielsweise durch eine Serverentität, effizient zugeordnet werden können.

Die Netzwerkadresse kann der Detektionsvorrichtung beispielweise durch die Serverentität über das Kommunikationsnetzwerk zugewiesen werden. Die Netzwerkadresse der Detektionsvorrichtung kann eine Internet Protocol (IP) Adresse, beispielsweise eine IPv4-Adresse oder eine IPv6-Adresse, sein.

Gemäß einer Ausführungsform ist der Detektor ausgebildet, die detektierte physikalische Größe mit einer vorbestimmten physikalischen Referenzgröße zu vergleichen, wobei die Kommunikationsschnittstelle ausgebildet ist, die Daten zu dem vorbestimmten Sendezeitpunkt auszusenden, falls die detektierte physikalische Größe die vorbestimmte physikalische Referenzgröße überschreitet. Dadurch wird der Vorteil erreicht, dass eine effiziente Überwachung der physikalischen Größe durch die Detektionsvorrichtung realisiert werden kann. Die Daten werden folglich nur ausgesendet, falls die detektierte physikalische Größe die vorbestimmte physikalische Referenzgröße überschreitet.

Gemäß einer Ausführungsform ist die Kommunikationsschnittstelle ausgebildet, ein Broadcastsignal von einer Serverentität über das Kommunikationsnetzwerk zu empfangen, wobei das Broadcastsignal ein weiteres Kommunikationsprofil umfasst, wobei das weitere Kommunikationsprofil der Detektionsvorrichtung zugeordnet ist, und wobei die Kommunikationsschnittstelle ausgebildet ist, das Kommunikationsprofil auf der Basis des weiteren Kommunikationsprofils zu verändern, insbesondere das Kommunikationsprofil durch das weitere Kommunikationsprofil zu ersetzen. Dadurch wird der Vorteil erreicht, dass das Kommunikationsprofil effizient aktualisiert werden kann.

Gemäß einer Ausführungsform ist die Kommunikationsschnittstelle ausgebildet, ein Synchronisationssignal, insbesondere einen Synchronisationsimpuls, von einer Serverentität über das Kommunikationsnetzwerk zu empfangen, wobei die Kommunikationsschnittstelle ausgebildet ist, das Kommunikationsprofil auf der Basis des Synchronisationssignals zu verändern. Dadurch wird der Vorteil erreicht, dass das Kommunikationsprofil effizient aktualisiert werden kann.

Das Synchronisationssignal, insbesondere der Synchronisationsimpuls, kann beispielsweise den freien Sendezeitschlitz und/oder den weiteren freien Sendezeitschlitz anzeigen.

Gemäß einer Ausführungsform ist der Speicher ein Festwertspeicher, wobei das Kommunikationsprofil der Detektionsvorrichtung in dem Speicher fest verdrahtet abgelegt ist. Dadurch wird der Vorteil erreicht, dass die Detektionsvorrichtung effizient implementiert werden kann.

Das Kommunikationsprofil kann bei der Herstellung der Detektionsvorrichtung in dem Festwertspeicher abgelegt werden. Der Festwertspeicher ist ein Nur-Lese-Speicher (engl. Read-Only Memory, ROM), auf welchen im Betrieb nur lesend zugegriffen werden kann.

Gemäß einer Ausführungsform umfasst die Detektionsvorrichtung einen Zeitgeber, insbesondere eine Echtzeituhr, zum Bereitstellen eines Zeitsignals, wobei das Zeitsignal eine Zeitdifferenz zwischen einem gegenwärtigen Zeitpunkt und einem vorbestimmten Referenzzeitpunkt anzeigt, und wobei die Kommunikationsschnittstelle ausgebildet ist, den vorbestimmten Sendezeitpunkt zum Aussenden der Daten auf der Basis des Zeitsignals zu bestimmen. Dadurch wird der Vorteil erreicht, dass auf die Bereitstellung eines externen Zeitsignals verzichtet werden kann und der vorbestimmte Sendezeitpunkt zum Aussenden der Daten durch die Detektionsvorrichtung effizient bestimmt werden kann.

Gemäß einer Ausführungsform ist die Kommunikationsschnittstelle ausgebildet, ein Zeitsynchronisationssignal von einer Serverentität über das Kommunikationsnetzwerk zu empfangen, wobei der Zeitgeber ausgebildet ist, das Zeitsignal auf der Basis des empfangenen Zeitsynchronisationssignals zu verändern. Dadurch wird der Vorteil erreicht, dass eine Synchronisation einer Mehrzahl von Zeitgebern hinsichtlich desselben Referenzzeitpunktes effizient realisiert werden kann.

Gemäß einer Ausführungsform umfasst der Zeitgeber einen Satellitennavigationsempfänger, insbesondere einen GPS-Satellitennavigationsempfänger oder einen GALILEO-Satellitennavigationsempfänger, wobei der Satellitennavigationsempfänger ausgebildet ist, ein Zeitsynchronisationssignal bereitzustellen, und wobei der Zeitgeber ausgebildet ist, das Zeitsignal auf der Basis des bereitgestellten Zeitsynchronisationssignals zu verändern. Dadurch wird der Vorteil erreicht, dass eine Synchronisation einer Mehrzahl von Zeitgebern hinsichtlich desselben Referenzzeitpunktes effizient realisiert werden kann.

Gemäß einer Ausführungsform umfasst der Zeitgeber einen Zeitzeichenempfänger, insbesondere einen DCF77-Empfänger, wobei der Zeitzeichenempfänger ausgebildet ist, ein Zeitsynchronisationssignal bereitzustellen, und wobei der Zeitgeber ausgebildet ist, das Zeitsignal auf der Basis des bereitgestellten Zeitsynchronisationssignals zu verändern. Dadurch wird der Vorteil erreicht, dass eine Synchronisation einer Mehrzahl von Zeitgebern hinsichtlich desselben Referenzzeitpunktes effizient realisiert werden kann.

Gemäß einer Ausführungsform umfasst das Kommunikationsnetzwerk eine Mehrzahl von Subnetzwerken, wobei die Kommunikationsschnittstelle ausgebildet ist, die Daten über ein Subnetzwerk der Mehrzahl von Subnetzwerken an die vorbestimmte Zielnetzwerkadresse auszusenden. Dadurch wird der Vorteil erreicht, dass die Mehrzahl von Subnetzwerken auf verschiedene Anwendungen ausgelegt werden können und eine effizientere Übertragung der Daten über das Kommunikationsnetzwerk realisiert werden kann.

Gemäß einer Ausführungsform ist das Kommunikationsnetzwerk ein Kommunikationsnetzwerk der fünften Generation (5G) oder einer weiteren Generation, wobei jedes Subnetzwerk ein Slice des Kommunikationsnetzwerkes ist. Dadurch wird der Vorteil erreicht, dass eine effiziente Übertragung der Daten über ein Kommunikationsnetzwerk der fünften Generation (5G) oder einer weiteren Generation realisiert werden kann.

Gemäß einem zweiten Aspekt betrifft die Erfindung eine Gruppe von Detektionsvorrichtungen, wobei jeder Detektionsvorrichtung ein vorbestimmter Sendezeitpunkt zum Aussenden von Daten zugeordnet ist, und wobei die vorbestimmten Sendezeitpunkte unterschiedlich sind. Dadurch wird der Vorteil erreicht, dass ein effizientes Konzept zur Medienzugriffssteuerung auf einem Kommunikationskanal realisiert werden kann.

Gemäß einer Ausführungsform sind die vorbestimmten Sendezeitpunkte in einem Sendeintervall angeordnet. Dadurch wird der Vorteil erreicht, dass eine Übertragung der Daten zeitlich auf das Sendeintervall begrenzt werden kann.

Gemäß einem dritten Aspekt betrifft die Erfindung ein Kommunikationssystem, mit einer Gruppe von Detektionsvorrichtungen, gemäß Anspruch 7.

Dadurch wird der Vorteil erreicht, dass ein effizientes Konzept zur Medienzugriffssteuerung auf einem Kommunikationskanal realisiert werden kann.

Gemäß einer Ausführungsform ist jede Detektionsvorrichtung der Gruppe ausgebildet, die Daten jeweils an dieselbe vorbestimmte Zielnetzwerkadresse auszusenden, wobei die vorbestimmte Zielnetzwerkadresse der Serverentität zugeordnet ist. Dadurch wird der Vorteil erreicht, dass die Daten effizient durch die Serverentität ausgewertet und gespeichert werden können.

Gemäß einer Ausführungsform umfasst das Kommunikationssystem eine weitere Gruppe von Detektionsvorrichtungen, wobei jeder Detektionsvorrichtung der weiteren Gruppe ein vorbestimmter Sendezeitpunkt zum Aussenden von Daten innerhalb des Sendeintervalls oder innerhalb eines weiteren Sendeintervalls zugeordnet ist, und wobei die vorbestimmten Sendezeitpunkte unterschiedlich sind, und eine weitere Serverentität, welche ausgebildet ist, mit jeder Detektionsvorrichtung der weiteren Gruppe über das Kommunikationsnetzwerk zu kommunizieren. Dadurch wird der Vorteil erreicht, dass die vorbestimmten Sendezeitpunkte der Gruppe sowie die vorbestimmten Sendezeitpunkte der weiteren Gruppe effizient verwaltet werden können.

Die Serverentität und die weitere Serverentität können über das Kommunikationsnetzwerk miteinander kommunizieren. Die Serverentität und die weitere Serverentität können Belegungssignale miteinander austauschen, welche durch die jeweilige Serverentität belegte Sendezeitpunkte anzeigen.

Gemäß einer Ausführungsform folgen das Sendeintervall und das weitere Sendeintervall zeitlich aufeinander. Dadurch wird der Vorteil erreicht, dass eine Überlappung der Sendeintervalle und/oder eine Kollision von Daten effizient verhindert werden kann.

Gemäß einer Ausführungsform ist jede Detektionsvorrichtung der weiteren Gruppe ausgebildet, die Daten jeweils an dieselbe weitere vorbestimmte Zielnetzwerkadresse auszusenden, wobei die weitere vorbestimmte Zielnetzwerkadresse der weiteren Serverentität zugeordnet ist. Dadurch wird der Vorteil erreicht, dass die Daten effizient durch die weitere Serverentität ausgewertet und gespeichert werden können.

Gemäß einer Ausführungsform ist das Kommunikationsnetzwerk ein Kommunikationsnetzwerk der fünften Generation (5G) oder einer weiteren Generation, wobei das Kommunikationsnetzwerk ein Subnetzwerk, insbesondere ein Slice, und ein weiteres Subnetzwerk, insbesondere ein weiteres Slice, umfasst, wobei die Gruppe von Detektionsvorrichtungen und die Serverentität dem Subnetzwerk zugeordnet sind, und wobei die weitere Gruppe von Detektionsvorrichtungen und die weitere Serverentität dem weiteren Subnetzwerk zugeordnet sind. Dadurch wird der Vorteil erreicht, dass eine effiziente Übertragung der Daten über ein Kommunikationsnetzwerk der fünften Generation (5G) oder einer weiteren Generation realisiert werden kann.

Gemäß einem vierten Aspekt betrifft die Erfindung ein Verfahren zum Detektieren einer physikalischen Größe unter Verwendung einer Detektionsvorrichtung, gemäß Anspruch 9.

Dadurch wird der Vorteil erreicht, dass ein effizientes Konzept zur Medienzugriffssteuerung auf einem Kommunikationskanal realisiert werden kann.

Das Verfahren kann durch die Detektionsvorrichtung ausgeführt werden. Weitere Merkmale des Verfahrens ergeben sich unmittelbar aus der Funktionalität und/oder den Merkmalen der Detektionsvorrichtung.

Die Detektionsvorrichtung und/oder die Serverentität können programmtechnisch eingerichtet sein, um den Programmcode auszuführen.

Die Erfindung kann in Hardware und/oder in Software realisiert werden.

### BESCHREIBUNG DER FIGUREN

Weitere Ausführungsbeispiele werden bezugnehmend auf die beiliegenden Zeichnungen näher erläutert. Es zeigen:
Fig. 1 ein schematisches Diagramm einer Detektionsvorrichtung zum Detektieren einer physikalischen Größe gemäß einer Ausführungsform;
Fig. 2 ein schematisches Diagramm einer Gruppe von Detektionsvorrichtungen zum Detektieren einer physikalischen Größe gemäß einer Ausführungsform;
Fig. 3 ein schematisches Diagramm einer Serverentität zum Kommunizieren mit einer Detektionsvorrichtung über ein Kommunikationsnetzwerk gemäß einer Ausführungsform;
Fig. 4 ein schematisches Diagramm eines Kommunikationssystems gemäß einer Ausführungsform;
Fig. 5 ein schematisches Diagramm eines Verfahrens zum Detektieren einer physikalischen Größe unter Verwendung einer Detektionsvorrichtung gemäß einer Ausführungsform;
Fig. 6 ein schematisches Diagramm eines Verfahrens zum Kommunizieren mit einer Detektionsvorrichtung über ein Kommunikationsnetzwerk unter Verwendung einer Serverentität gemäß einer Ausführungsform;
Fig. 7 ein schematisches Diagramm einer Detektionsvorrichtung zum Detektieren einer physikalischen Größe gemäß einer Ausführungsform;
Fig. 8 ein schematisches Diagramm eines Kommunikationssystems gemäß einer Ausführungsform;
Fig. 9 ein schematisches Diagramm eines Sendeintervalls mit einer Mehrzahl von Sendezeitschlitzen einer Gruppe von Detektionsvorrichtungen gemäß einer Ausführungsform;
Fig. 10 ein schematisches Diagramm einer Mehrzahl von Sendeintervallen für eine Mehrzahl von Gruppen von Detektionsvorrichtungen gemäß einer Ausführungsform;
Fig. 11 ein schematisches Diagramm eines Kommunikationssystems gemäß einer Ausführungsform; und
Fig. 12 ein schematisches Diagramm eines Kommunikationssystems gemäß einer Ausführungsform.

### DETAILIERTE BESCHREIBUNG DER FIGUREN

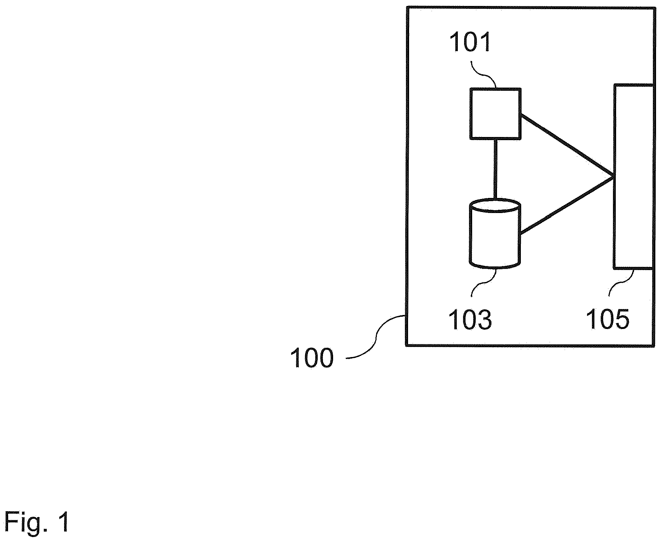

Fig. 1 zeigt ein schematisches Diagramm einer Detektionsvorrichtung 100 zum Detektieren einer physikalischen Größe gemäß einer Ausführungsform.

Die Detektionsvorrichtung 100 umfasst einen Detektor 101 zum Detektieren der physikalischen Größe, wobei der Detektor 101 ausgebildet ist, Daten auszugeben, welche die physikalische Größe repräsentieren. Die Detektionsvorrichtung 100 umfasst ferner einen Speicher 103, in welchem ein Kommunikationsprofil der Detektionsvorrichtung 100 abgelegt ist, wobei das Kommunikationsprofil zumindest einen vorbestimmten Sendezeitpunkt zum Aussenden der Daten definiert, wobei der vorbestimmte Sendezeitpunkt der Detektionsvorrichtung 100 zugeordnet ist. Zudem umfasst die Detektionsvorrichtung 100 eine Kommunikationsschnittstelle 105, welche ausgebildet ist, die Daten zu dem vorbestimmten Sendezeitpunkt über ein Kommunikationsnetzwerk an eine vorbestimmte Zielnetzwerkadresse auszusenden.

Die Detektionsvorrichtung 100 umfasst ferner einen Zeitgeber, insbesondere eine Echtzeituhr, zum Bereitstellen eines Zeitsignals. Das Zeitsignal zeigt eine Zeitdifferenz zwischen einem gegenwärtigen Zeitpunkt und einem vorbestimmten Referenzzeitpunkt an.

Die Kommunikationsschnittstelle 105 ist ausgebildet, den vorbestimmten Sendezeitpunkt zum Aussenden der Daten auf der Basis des Zeitsignals zu bestimmen.

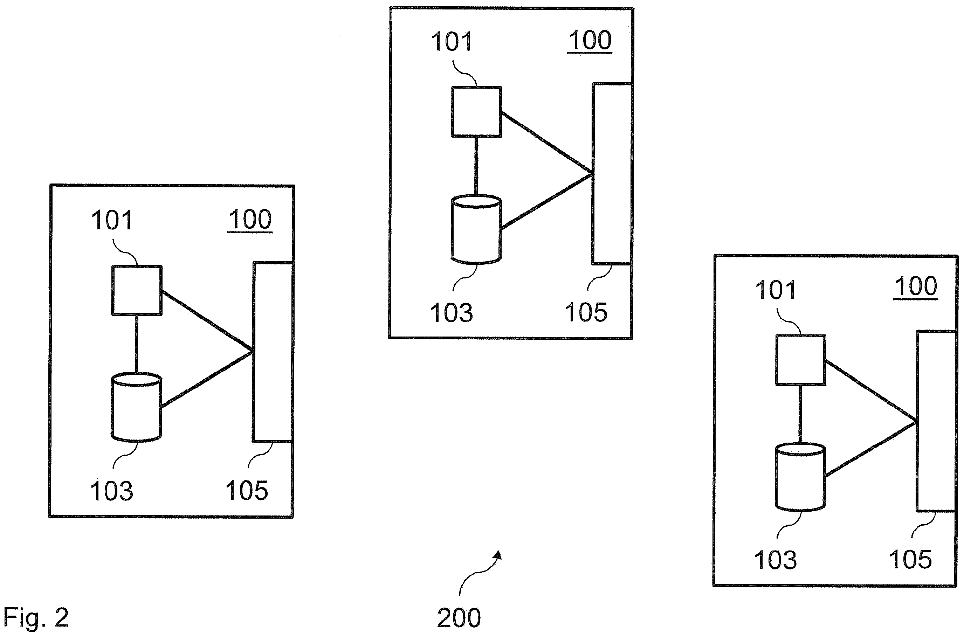

Fig. 2 zeigt ein schematisches Diagramm einer Gruppe 200 von Detektionsvorrichtungen 100 zum Detektieren einer physikalischen Größe gemäß einer Ausführungsform.

Jede Detektionsvorrichtung 100 umfasst jeweils einen Detektor 101, einen Speicher 103, und eine Kommunikationsschnittstelle 105. Jeder Detektionsvorrichtung 100 ist ein vorbestimmter Sendezeitpunkt zum Aussenden von Daten zugeordnet. Die vorbestimmten Sendezeitpunkte der Detektionsvorrichtungen 100 innerhalb der Gruppe 200 sind unterschiedlich. Die vorbestimmten Sendezeitpunkte können in einem Sendeintervall angeordnet sein.

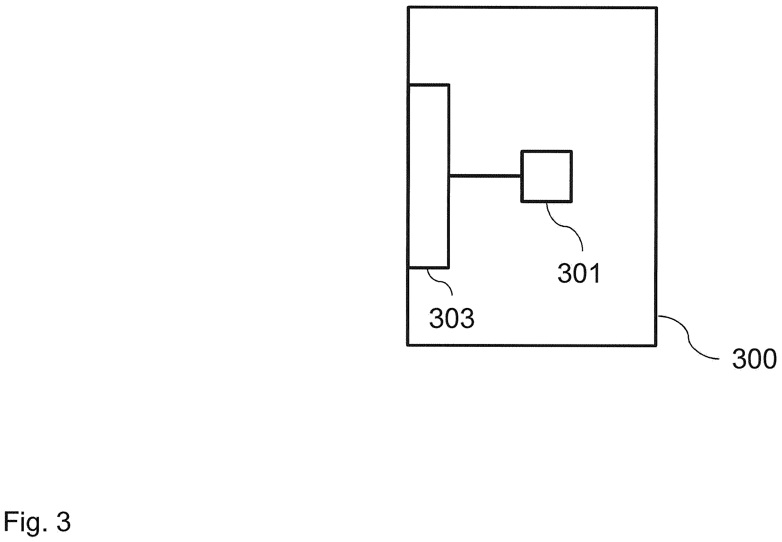

Fig. 3 zeigt ein schematisches Diagramm einer Serverentität 300 zum Kommunizieren mit einer Detektionsvorrichtung über ein Kommunikationsnetzwerk gemäß einer Ausführungsform.

Die Detektionsvorrichtung ist ausgebildet, eine physikalische Größe zu detektieren, und Daten auszugeben, welche die physikalische Größe repräsentieren. In der Detektionsvorrichtung ist ein Kommunikationsprofil der Detektionsvorrichtung abgelegt, wobei das Kommunikationsprofil zumindest einen vorbestimmten Sendezeitpunkt zum Aussenden der Daten definiert, und wobei der vorbestimmte Sendezeitpunkt der Detektionsvorrichtung zugeordnet ist. Die Detektionsvorrichtung ist ausgebildet, die Daten zu dem vorbestimmten Sendezeitpunkt über das Kommunikationsnetzwerk an eine vorbestimmte Zielnetzwerkadresse auszusenden.

Die Serverentität 300 umfasst einen Prozessor 301, welcher ausgebildet ist, ein weiteres Kommunikationsprofil der Detektionsvorrichtung zu bestimmen, wobei das weitere Kommunikationsprofil der Detektionsvorrichtung zugeordnet ist, und ein Broadcastsignal zu erzeugen, wobei das Broadcastsignal das weitere Kommunikationsprofil umfasst. Die Serverentität 300 umfasst ferner eine Kommunikationsschnittstelle 303, welche ausgebildet ist, das Broadcastsignal über das Kommunikationsnetzwerk an die Detektionsvorrichtung auszusenden.

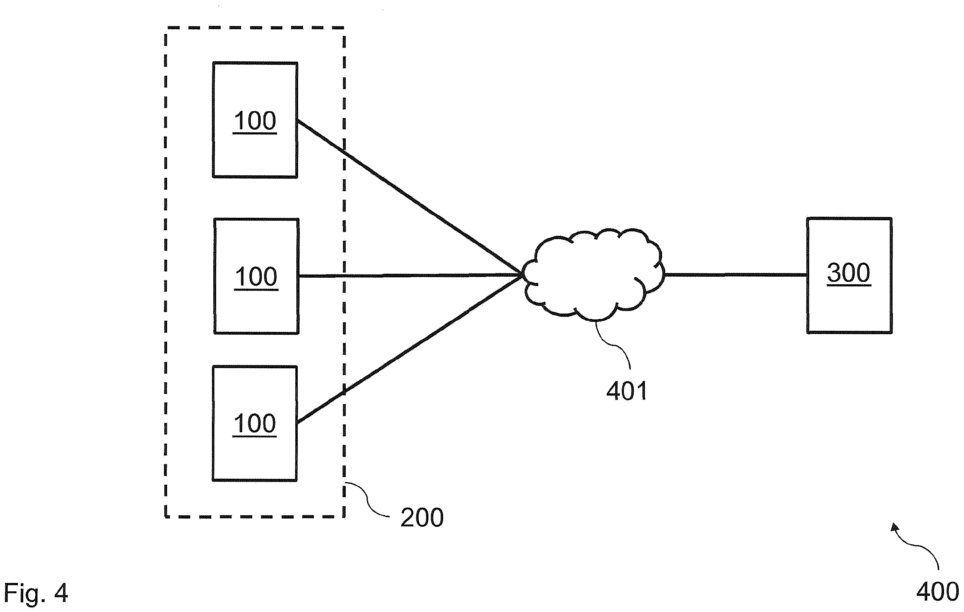

Fig. 4 zeigt ein schematisches Diagramm eines Kommunikationssystems 400 gemäß einer Ausführungsform.

Das Kommunikationssystem 400 umfasst eine Gruppe 200 von Detektionsvorrichtungen 100, wobei jeder Detektionsvorrichtung 100 der Gruppe 200 ein vorbestimmter Sendezeitpunkt zum Aussenden von Daten innerhalb eines Sendeintervalls zugeordnet ist, und wobei die vorbestimmten Sendezeitpunkte unterschiedlich sind. Das Kommunikationssystem 400 umfasst ferner eine Serverentität 300, welche ausgebildet ist, mit jeder Detektionsvorrichtung 100 der Gruppe 200 über ein Kommunikationsnetzwerk 401 zu kommunizieren.

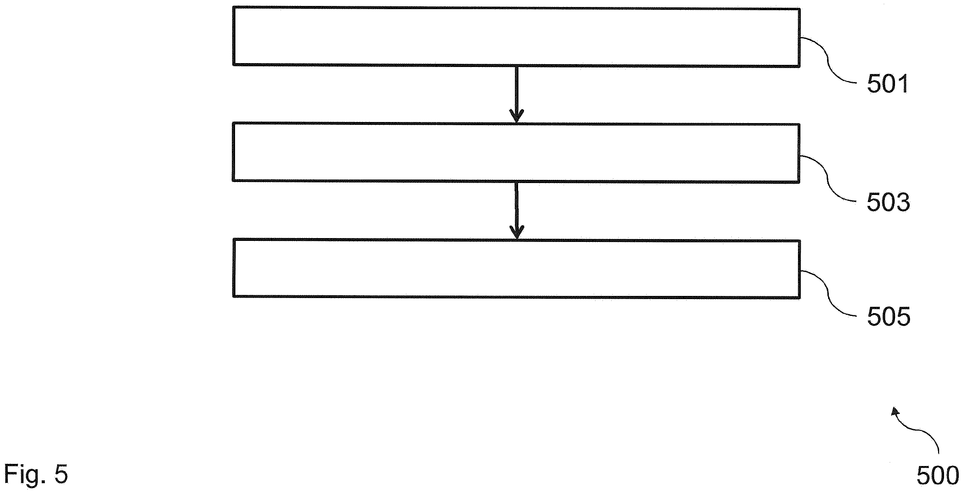

Fig. 5 zeigt ein schematisches Diagramm eines Verfahrens 500 zum Detektieren einer physikalischen Größe unter Verwendung einer Detektionsvorrichtung gemäß einer Ausführungsform.

Die Detektionsvorrichtung umfasst einen Detektor, einen Speicher und eine Kommunikationsschnittstelle, wobei in dem Speicher ein Kommunikationsprofil der Detektionsvorrichtung abgelegt ist, wobei das Kommunikationsprofil zumindest einen vorbestimmten Sendezeitpunkt zum Aussenden von Daten definiert, und wobei der vorbestimmte Sendezeitpunkt der Detektionsvorrichtung zugeordnet ist.

Das Verfahren 500 umfasst ein Detektieren 501 der physikalischen Größe durch den Detektor, ein Ausgeben 503 der Daten durch den Detektor, welche die physikalische Größe repräsentieren, und ein Aussenden 505 der Daten zu dem vorbestimmten Sendezeitpunkt über ein Kommunikationsnetzwerk an eine vorbestimmte Zielnetzwerkadresse durch die Kommunikationsschnittstelle.

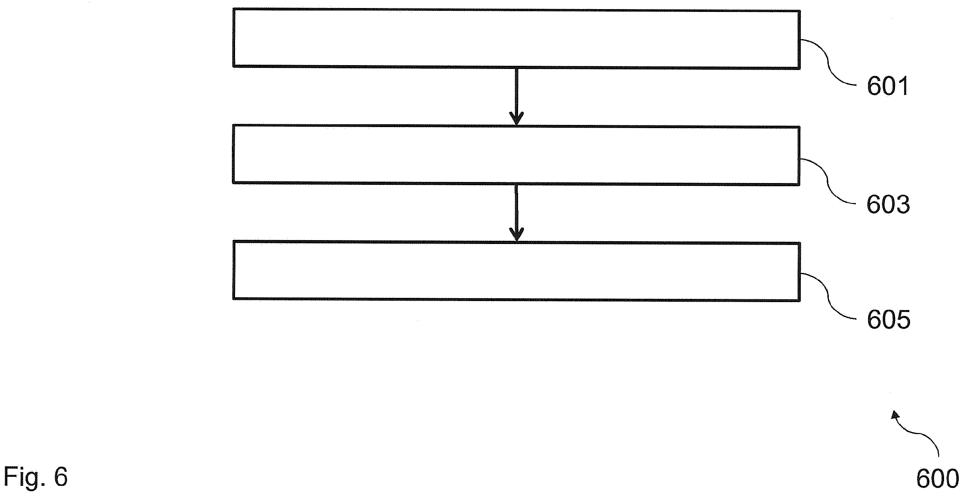

Fig. 6 zeigt ein schematisches Diagramm eines Verfahrens 600 zum Kommunizieren mit einer Detektionsvorrichtung über ein Kommunikationsnetzwerk unter Verwendung einer Serverentität gemäß einer Ausführungsform. Die Serverentität umfasst einen Prozessor und eine Kommunikationsschnittstelle.

Die Detektionsvorrichtung ist ausgebildet, eine physikalische Größe zu detektieren, und Daten auszugeben, welche die physikalische Größe repräsentieren. In der Detektionsvorrichtung ist ein Kommunikationsprofil der Detektionsvorrichtung abgelegt, wobei das Kommunikationsprofil zumindest einen vorbestimmten Sendezeitpunkt zum Aussenden der Daten definiert, wobei der vorbestimmte Sendezeitpunkt der Detektionsvorrichtung zugeordnet ist. Die Detektionsvorrichtung ist ausgebildet, die Daten zu dem vorbestimmten Sendezeitpunkt über das Kommunikationsnetzwerk an eine vorbestimmte Zielnetzwerkadresse auszusenden.

Das Verfahren 600 umfasst ein Bestimmen 601 eines weiteren Kommunikationsprofils der Detektionsvorrichtung durch den Prozessor, wobei das weitere Kommunikationsprofil der Detektionsvorrichtung zugeordnet ist, ein Erzeugen 603 eines Broadcastsignals durch den Prozessor, wobei das Broadcastsignal das weitere Kommunikationsprofil umfasst, und ein Aussenden 605 des Broadcastsignals über das Kommunikationsnetzwerk an die Detektionsvorrichtung durch die Kommunikationsschnittstelle.

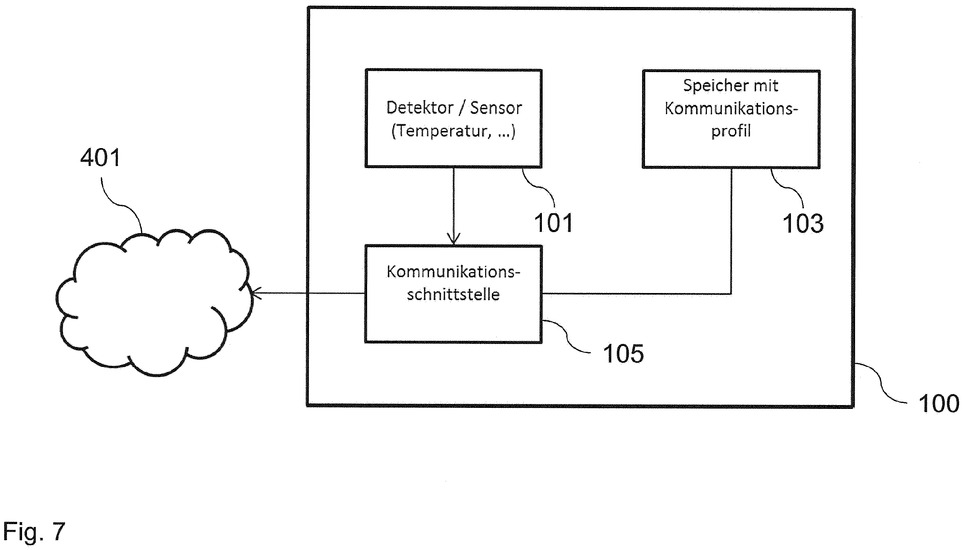

Fig. 7 zeigt ein schematisches Diagramm einer Detektionsvorrichtung 100 zum Detektieren einer physikalischen Größe gemäß einer Ausführungsform.

Die Detektionsvorrichtung 100 umfasst einen Detektor 101 zum Detektieren der physikalischen Größe, wobei der Detektor 101 ausgebildet ist, Daten auszugeben, welche die physikalische Größe repräsentieren. Die Detektionsvorrichtung 100 umfasst ferner einen Speicher 103, in welchem ein Kommunikationsprofil der Detektionsvorrichtung 100 abgelegt ist, wobei das Kommunikationsprofil zumindest einen vorbestimmten Sendezeitpunkt zum Aussenden der Daten definiert, wobei der vorbestimmte Sendezeitpunkt der Detektionsvorrichtung 100 zugeordnet ist. Zudem umfasst die Detektionsvorrichtung 100 eine Kommunikationsschnittstelle 105, welche ausgebildet ist, die Daten zu dem vorbestimmten Sendezeitpunkt über ein Kommunikationsnetzwerk 401 an eine vorbestimmte Zielnetzwerkadresse auszusenden.

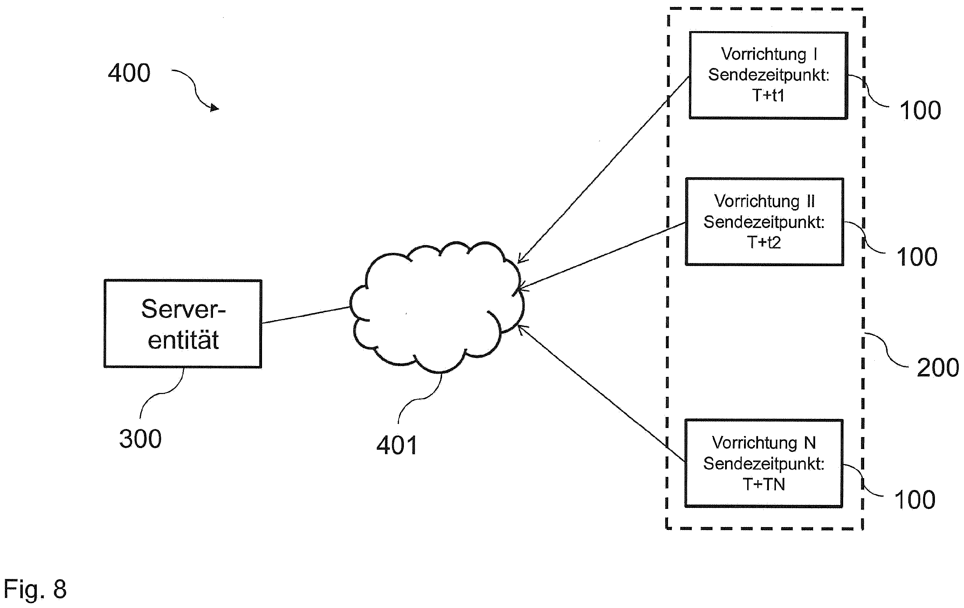

Fig. 8 zeigt ein schematisches Diagramm eines Kommunikationssystems 400 gemäß einer Ausführungsform.

Das Kommunikationssystem 400 umfasst eine Gruppe 200 von Detektionsvorrichtungen 100, wobei jeder Detektionsvorrichtung 100 der Gruppe 200 ein vorbestimmter Sendezeitpunkt zum Aussenden von Daten innerhalb eines Sendeintervalls zugeordnet ist, und wobei die vorbestimmten Sendezeitpunkte unterschiedlich sind. Eine erste Detektionsvorrichtung 100 ist ausgebildet, Daten zu dem vorbestimmten Sendezeitpunkt T+t1 auszusenden. Eine zweite Detektionsvorrichtung 100 ist ausgebildet, Daten zu dem vorbestimmten Sendezeitpunkt T+t2 auszusenden. Eine N-te Detektionsvorrichtung 100 ist ausgebildet, Daten zu dem vorbestimmten Sendezeitpunkt T+TN auszusenden. Die Sendeperiodendauer T kann durch das jeweilige Kommunikationsprofil definiert sein. Das Kommunikationssystem 400 umfasst ferner eine Serverentität 300, welche ausgebildet ist, mit jeder Detektionsvorrichtung 100 der Gruppe 200 über ein Kommunikationsnetzwerk 401 zu kommunizieren. Die maximale Anzahl der Detektionsvorrichtungen kann durch die Sendeperiodendauer T sowie die Länge der Sendezeitschlitze bestimmt sein.

Jeder Detektionsvorrichtung 100 der Gruppe 200 können feste, gegebenenfalls periodisch wiederkehrende Sendezeitpunkte zugewiesen werden. Jede Detektionsvorrichtung 100 verfügt mithin über eine eigene Identität, welcher ein entsprechendes Kommunikationsprofil zugeordnet ist. Jede Detektionsvorrichtung 100 kann ihre jeweiligen Daten in Sendezeitschlitzen aussenden, welche der jeweiligen Detektionsvorrichtung 100 fest zugeordnet sein können. Die Zuordnung kann beispielsweise durch die Serverentität 300 erfolgen. Dadurch wird der Vorteil erreicht, dass ein Rückkanal für die Kommunikation entfallen kann.

Die Initialisierung der Kommunikationsprofile sowie die Zuweisung der Sendezeitschlitze zu den Kommunikationsprofilen kann beispielsweise durch ein Broadcastsignal der Serverentität 300 an alle Detektionsvorrichtungen 100 der Gruppe 200 erfolgen. Das Broadcastsignal umfasst jeweils ein weiteres Kommunikationsprofil für jede Detektionsvorrichtung 100, welches jeweils freie Sendezeitpunkte und/oder freie Sendezeitschlitze anzeigen kann. Jede Detektionsvorrichtung 100 kann ihr jeweiliges Kommunikationsprofil auf der Basis des jeweiligen weiteren Kommunikationsprofils aktualisieren. Eine weitere Möglichkeit hierfür besteht in der Aussendung eines Synchronisationssignals, insbesondere eines Synchronisationsimpulses, durch die Serverentität 300, um freie Sendezeitpunkte und/oder Sendezeitschlitze anzuzeigen. Ferner kann ein Sendezeitpunkt und/oder Sendezeitschlitz bei einer Montage der jeweiligen Detektionsvorrichtung 100 für die Gruppe 200 festgelegt werden.

Gemeinsam mit den Daten kann jeweils auch eine vorbestimmte Identitätskennung der Detektionsvorrichtung 100 für die Zuordnung der Daten ausgesendet werden. Die Kommunikation zwischen jeder Detektionsvorrichtung 100 der Gruppe 200 und der Serverentität 300 kann schmalbandig sein, d.h. mit sehr geringer Datenrate erfolgen.

Das Kommunikationsnetzwerk 401 kann ein drahtloses Kommunikationsnetzwerk oder ein drahtgebundenes Kommunikationsnetzwerk sein. Die Kommunikation kann beispielsweise unter Verwendung eines IEEE 802.11 Kommunikationsstandards (Wireless Local Area Network, WLAN), eines IEEE 802.15.1 Kommunikationsstandards (Bluetooth), eines DSL Kommunikationsstandards oder eines 3GPP Kommunikationsstandards erfolgen. Insbesondere kann die Kommunikation unter Verwendung eines Mobilfunkstandards der fünften Generation (5G) oder einer weiteren Generation durchgeführt werden. Zusammenfassend ergeben sich hierdurch mehrere Vorteile. Das Kommunikationssystem 400 kann kostengünstig implementiert werden. Zugleich können Kollisionen der Daten auf dem Kommunikationskanal vermieden werden. Das Kommunikationssystem 400 ermöglicht eine hohe Volumendatenrate, wodurch eine hohe Anzahl von Detektionsvorrichtungen unterstützt werden kann. Für die Kommunikation über das Kommunikationsnetzwerk 401 kann auf einen Rückkanal verzichtet werden. Ferner sind keine Bestätigungssignale (engl. Acknowledgements, ACKs) erforderlich. Für die Übertragung der Daten über das Kommunikationsnetzwerk 401 ist gegebenenfalls ein Kommunikationskanal ausreichend. Ferner kann eine einfache Modulation, beispielsweise eine Amplitudenmodulation oder eine Phasenmodulation, eingesetzt werden.

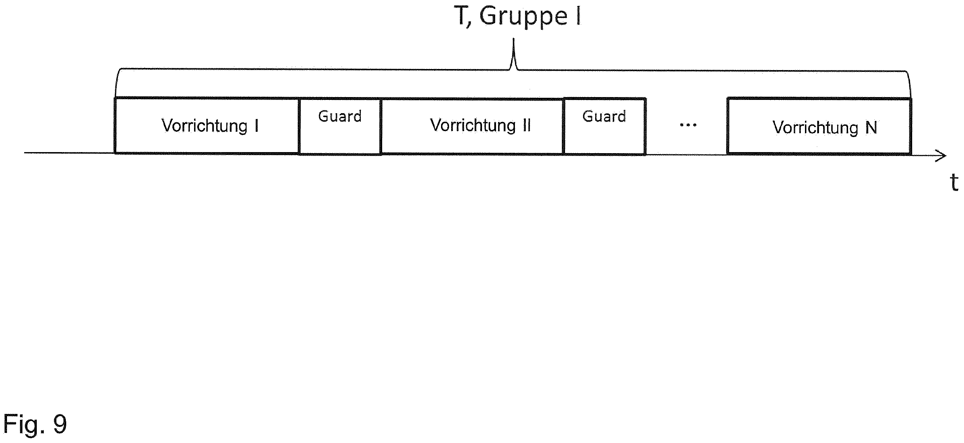

Fig. 9 zeigt ein schematisches Diagramm eines Sendeintervalls mit einer Mehrzahl von Sendezeitschlitzen einer Gruppe von Detektionsvorrichtungen gemäß einer Ausführungsform. Die Sendezeitschlitze sind dabei jeweils durch eine Schutzzeit (engl. Guard) voneinander getrennt. Die Schutzzeit kann optional verwendet werden. Ferner kann eine Sendeperiodendauer T vorgesehen sein.

Gemäß einer Ausführungsform werden Detektionsvorrichtungen mit verschiedenen Sendeperiodendauern, d.h. Periodizitäten, verschiedenen Gruppen zugeordnet. Die Detektionsvorrichtungen in einer Gruppe können beispielsweise alle 60 Sekunden senden. Die Detektionsvorrichtungen in einer weiteren Gruppe können beispielsweise alle 30 Sekunden senden.

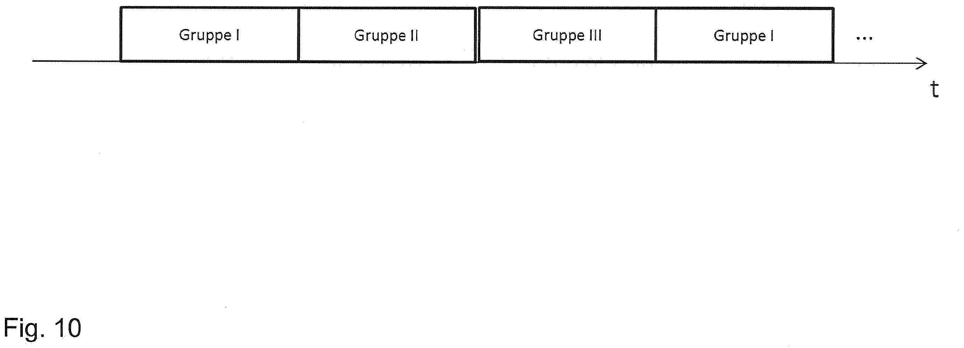

Fig. 10 zeigt ein schematisches Diagramm einer Mehrzahl von Sendeintervallen für eine Mehrzahl von Gruppen von Detektionsvorrichtungen gemäß einer Ausführungsform. Die Sendeintervalle können sich periodisch wiederholen und/oder periodisch fortsetzen.

Zur Erhöhung der maximalen Anzahl von Detektionsvorrichtungen wird n örtlich beabstandeten Gruppen jeweils dasselbe Kommunikationsprofil verwendet. Die Anzahl von Kollisionen kann dadurch weiter reduziert werden. Mithin wird eine räumliche Diversität (engl. spatial diversity) genutzt. Ein Austausch von Informationen hinsichtlich freier Sendezeitpunkte und/oder Sendezeitschlitzen zwischen einer Mehrzahl von Serverentitäten sowie eine Synchronisation von Broadcastsignalrahmen zwischen den Serverentitäten können eine Wahrscheinlichkeit von Kollisionen weiter verringern und die Systemkapazität weiter erhöhen.

Die Mehrzahl von Sendeintervallen können ferner vorbestimmten Tageszeitintervallen zugeordnet werden. Beispielsweise kann eine erste Gruppe zwischen 1:00 Uhr und 5:00 Uhr morgens senden, und eine zweite Gruppe zwischen 5:00 Uhr und 10:00 Uhr morgens.

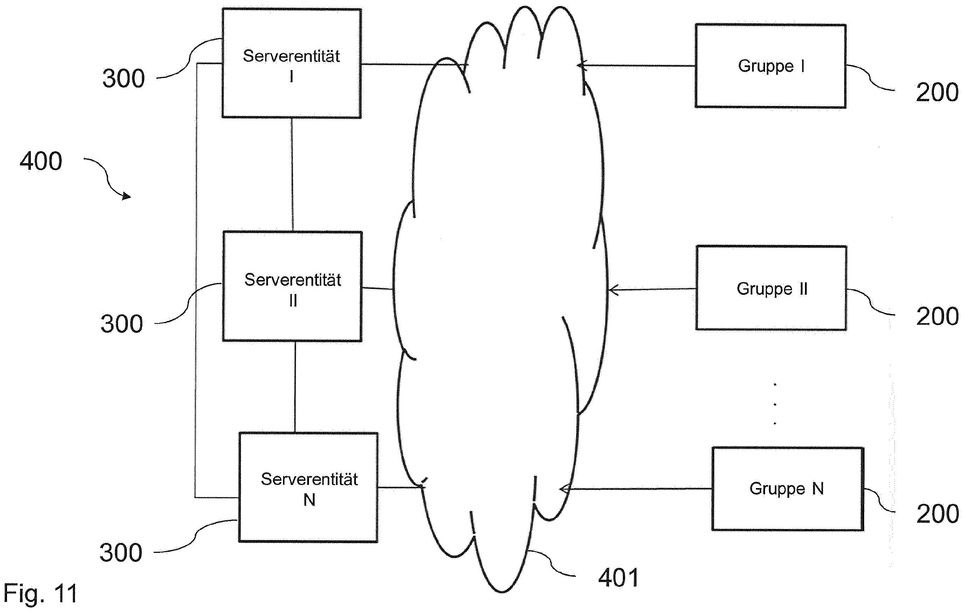

Fig. 11 zeigt ein schematisches Diagramm eines Kommunikationssystems 400 gemäß einer Ausführungsform. Das Kommunikationssystem 400 umfasst eine Mehrzahl von Gruppen 200 von Detektionsvorrichtungen sowie eine Mehrzahl von Serverentitäten 300. Die Mehrzahl von Gruppen 200 von Detektionsvorrichtungen kann mit der Mehrzahl von Serverentitäten 300 über ein Kommunikationsnetzwerk 401 kommunizieren.

Die Gruppen 200 umfassen jeweils Detektionsvorrichtungen. Jeder Gruppe 200 ist eine zugehörige Serverentität 300 zugeordnet. Die Serverentitäten 300 können sich untereinander bezüglich der Sendezeitpunkte und/oder Sendezeitschlitze synchronisieren. Auf diese Weise werden weitere Kollisionen bei der Kommunikation über das Kommunikationsnetzwerk 401 vermieden. Außerdem wird das Übertragungsmedium im Sinne einer Zeitdiversität effizient genutzt. Dadurch wird die Systemkapazität weiter erhöht. Außerdem können sich die Serverentitäten 300 über freie Sendezeitpunkte und/oder Sendezeitschlitze austauschen und sich diese gegenseitig zuweisen.

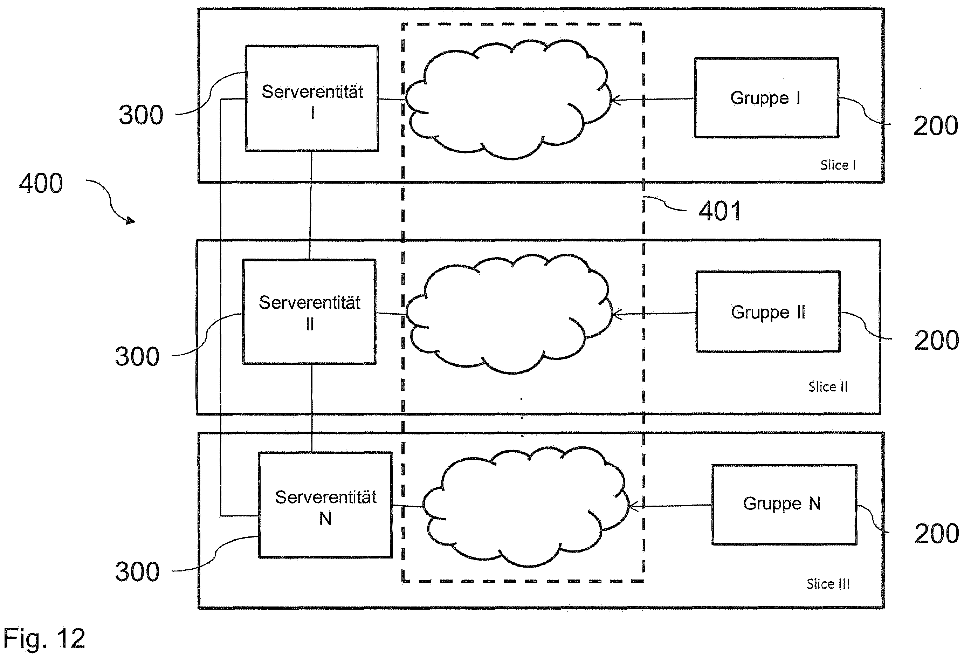

Fig. 12 zeigt ein schematisches Diagramm eines Kommunikationssystems 400 gemäß einer Ausführungsform. Das Kommunikationssystem 400 umfasst eine Mehrzahl von Gruppen 200 von Detektionsvorrichtungen sowie eine Mehrzahl von Serverentitäten 300. Die Mehrzahl von Gruppen 200 von Detektionsvorrichtungen kann mit der Mehrzahl von Serverentitäten 300 über ein Kommunikationsnetzwerk 401 kommunizieren.

Das Kommunikationsnetzwerk 401 umfasst eine Mehrzahl von Subnetzwerken. Jede Gruppe 200 ist mit einer jeweiligen Serverentität 300 einem jeweiligen Subnetzwerk zugeordnet. Das Kommunikationsnetzwerk 401 kann ein Kommunikationsnetzwerk der fünften Generation (5G) oder einer weiteren Generation sein, wobei jedes Subnetzwerk einem Slice des Kommunikationsnetzwerkes 401 zugeordnet ist. Die Kommunikation zwischen den Serverentitäten 300 kann in einer Slice-Managementschicht, welche über der Infrastrukturschicht liegen kann, verwaltet werden.

### BEZUGSZEICHENLISTE

- 100: Detektionsvorrichtung
- 101: Detektor
- 103: Speicher
- 105: Kommunikationsschnittstelle

- 200: Gruppe von Detektionsvorrichtungen

- 300: Serverentität
- 301: Prozessor
- 303: Kommunikationsschnittstelle

- 400: Kommunikationssystem
- 401: Kommunikationsnetzwerk

- 500: Verfahren zum Detektieren einer physikalischen Größe
- 501: Detektieren
- 503: Ausgeben
- 505: Aussenden

- 600: Verfahren zum Kommunizieren mit einer Detektionsvorrichtung
- 601: Bestimmen
- 603: Erzeugen
- 605: Aussenden

## Patentansprüche

1. Detektionsvorrichtung (100) zum Detektieren einer physikalischen Größe, mit:
einem Detektor (101) zum Detektieren der physikalischen Größe, wobei der Detektor (101) ausgebildet ist, Daten auszugeben, welche die physikalische Größe repräsentieren;
einem Speicher (103), in welchem ein Kommunikationsprofil der Detektionsvorrichtung (100) abgelegt ist, wobei das Kommunikationsprofil zumindest einen vorbestimmten Sendezeitpunkt zum Aussenden der Daten definiert, wobei der vorbestimmte Sendezeitpunkt der Detektionsvorrichtung (100) zugeordnet ist; und
einem Zeitgeber zum Bereitstellen eines Zeitsignals, wobei das Zeitsignal eine Zeitdifferenz zwischen einem gegenwärtigen Zeitpunkt und einem vorbestimmten Referenzzeitpunkt anzeigt, wobei der Zeitgeber einen Zeitzeichenempfänger umfasst, welcher ausgebildet ist, ein Zeitsynchronisationssignal bereitzustellen, wobei der Zeitgeber ausgebildet ist, das Zeitsignal auf der Basis des bereitgestellten Zeitsynchronisationssignals zu verändern; und
einer Kommunikationsschnittstelle (105), welche ausgebildet ist, die Daten zu dem vorbestimmten Sendezeitpunkt über ein Kommunikationsnetzwerk (401) an eine vorbestimmte Zielnetzwerkadresse auszusenden, wobei die Kommunikationsschnittstelle (105) ausgebildet ist, den vorbestimmten Sendezeitpunkt zum Aussenden der Daten auf der Basis des Zeitsignals zu bestimmen;
wobei die Kommunikationsschnittstelle (105) ausgebildet ist, ein Broadcastsignal von einer Serverentität (300) über das Kommunikationsnetzwerk (401) zu empfangen, wobei das Broadcastsignal ein weiteres Kommunikationsprofil umfasst, wobei das weitere Kommunikationsprofil der Detektionsvorrichtung (100) zugeordnet ist, und wobei die Kommunikationsschnittstelle (105) ausgebildet ist, das Kommunikationsprofil auf der Basis des weiteren Kommunikationsprofils zu verändern,
wobei die Detektionsvorrichtung (100) einer Gruppe von Detektionsvorrichtungen zugeordnet ist, wobei die Gruppe von Detektionsvorrichtungen zu einer weiteren Gruppe von Detektionsvorrichtungen örtlich beabstandet ist, wobei das Kommunikationsprofil der Detektionsvorrichtung dasselbe ist wie das Kommunikationsprofil einer Detektionsvorrichtung der weiteren Gruppe von Detektionsvorrichtungen.

2. Detektionsvorrichtung (100) nach Anspruch 1, wobei der Detektor (101) ausgebildet ist, eine Temperatur, eine Feuchtigkeit, eine Energie, eine Leistung, eine Position, eine Geschwindigkeit, eine Beschleunigung, einen Winkel, eine Winkelgeschwindigkeit, eine Winkelbeschleunigung, eine Drehzahl, eine Kraft, ein Drehmoment, einen Energieverbrauch, einen Wasserverbrauch, einen Wärmeverbrauch oder einen Kraftstoffverbrauch als physikalische Größe zu bestimmen.

3. Detektionsvorrichtung (100) nach einem der vorstehenden Ansprüche, wobei der vorbestimmte Sendezeitpunkt einen Beginn eines freien Sendezeitschlitzes definiert, wobei der freie Sendezeitschlitz eine vorbestimmte Sendezeitschlitzdauer aufweist, und wobei die Kommunikationsschnittstelle (105) ausgebildet ist, die Daten innerhalb des freien Sendezeitschlitzes auszusenden.

4. Detektionsvorrichtung (100) nach einem der vorstehenden Ansprüche, wobei der Zeitzeichenempfänger ein DCF77-Empfänger ist.

5. Detektionsvorrichtung (100) nach einem der vorstehenden Ansprüche, wobei das Kommunikationsnetzwerk (401) eine Mehrzahl von Subnetzwerken umfasst, und wobei die Kommunikationsschnittstelle (105) ausgebildet ist, die Daten über ein Subnetzwerk der Mehrzahl von Subnetzwerken an die vorbestimmte Zielnetzwerkadresse auszusenden.

6. Gruppe (200) von Detektionsvorrichtungen (100) nach einem der Ansprüche 1 bis 5, wobei jeder Detektionsvorrichtung (100) ein vorbestimmter Sendezeitpunkt zum Aussenden von Daten zugeordnet ist, und wobei die vorbestimmten Sendezeitpunkte unterschiedlich sind.

7. Kommunikationssystem (400), mit:
einer Gruppe (200) und einer weiteren Gruppe (200) von Detektionsvorrichtungen (100) nach einem der Ansprüche 1 bis 5, wobei jeder Detektionsvorrichtung (100) der Gruppe (200) und der weiteren Gruppe (200) ein vorbestimmter Sendezeitpunkt zum Aussenden von Daten innerhalb eines Sendeintervalls zugeordnet ist, und wobei die vorbestimmten Sendezeitpunkte unterschiedlich sind; und
einer Serverentität (300) zum Kommunizieren mit jeder Detektionsvorrichtung (100) der Gruppe (200) über ein Kommunikationsnetzwerk (401) und einer weiteren Serverentität (300) zum Kommunizieren mit jeder Detektionsvorrichtung (100) der weiteren Gruppe (200) über das Kommunikationsnetzwerk (401), mit jeweils:
einem Prozessor (301), welcher ausgebildet ist, ein weiteres Kommunikationsprofil einer Detektionsvorrichtung (100) zu bestimmen, wobei das weitere Kommunikationsprofil der Detektionsvorrichtung (100) zugeordnet ist, und das Broadcastsignal zu erzeugen, wobei das Broadcastsignal das weitere Kommunikationsprofil umfasst; und
einer Kommunikationsschnittstelle (303), welche ausgebildet ist, das Broadcastsignal über das Kommunikationsnetzwerk (401) an die Detektionsvorrichtung (100) auszusenden,
wobei die Detektionsvorrichtungen (100) der Gruppe (200) von den Detektionsvorrichtungen (100) der weiteren Gruppe (200) örtlich beabstandet sind, wobei in örtlich beanstandenden Gruppen dasselbe Kommunikationsprofil verwendet wird.

8. Kommunikationssystem (400) nach Anspruch 7, wobei das Kommunikationsnetzwerk (401) ein Subnetzwerk und ein weiteres Subnetzwerk umfasst, wobei die Gruppe (200) von Detektionsvorrichtungen (100) und die Serverentität (300) dem Subnetzwerk zugeordnet sind, und wobei die weitere Gruppe (200) von Detektionsvorrichtungen (100) und die weitere Serverentität (300) dem weiteren Subnetzwerk zugeordnet sind.

9. Verfahren (500) zum Detektieren einer physikalischen Größe unter Verwendung einer Detektionsvorrichtung (100) in einem Kommunikationssystem nach einem der Ansprüche 7 bis 8, wobei die Detektionsvorrichtung (100) einen Detektor (101), einen Speicher (103), einen Zeitgeber, und eine Kommunikationsschnittstelle (105) umfasst, wobei der Zeitgeber einen Zeitzeichenempfänger umfasst, wobei in dem Speicher (103) ein Kommunikationsprofil der Detektionsvorrichtung (100) abgelegt ist, wobei das Kommunikationsprofil zumindest einen vorbestimmten Sendezeitpunkt zum Aussenden von Daten definiert, wobei der vorbestimmte Sendezeitpunkt der Detektionsvorrichtung (100) zugeordnet ist, mit:
Detektieren (501) der physikalischen Größe durch den Detektor (101);
Ausgeben (503) der Daten durch den Detektor (101), welche die physikalische Größe repräsentieren;
Bereitstellen eines Zeitsignals durch den Zeitgeber, wobei das Zeitsignal eine Zeitdifferenz zwischen einem gegenwärtigen Zeitpunkt und einem vorbestimmten Referenzzeitpunkt anzeigt;
Bereitstellen eines Zeitsynchronisationssignals durch den Zeitzeichenempfänger;
Verändern des Zeitsignals auf der Basis des bereitgestellten Zeitsynchronisationssignals durch den Zeitgeber;
Bestimmen des vorbestimmten Sendezeitpunkts zum Aussenden der Daten auf der Basis des Zeitsignals durch die Kommunikationsschnittstelle (105);
Aussenden (505) der Daten zu dem vorbestimmten Sendezeitpunkt über ein Kommunikationsnetzwerk (401) an eine vorbestimmte Zielnetzwerkadresse durch die Kommunikationsschnittstelle (105);
Empfangen eines Broadcastsignals von einer Serverentität (300) über das Kommunikationsnetzwerk (401) durch die Kommunikationsschnittstelle (105), wobei das Broadcastsignal ein weiteres Kommunikationsprofil umfasst, wobei das weitere Kommunikationsprofil der Detektionsvorrichtung (100) zugeordnet ist; und
Verändern des Kommunikationsprofils auf der Basis des weiteren Kommunikationsprofils durch die Kommunikationsschnittstelle (105);
wobei die Detektionsvorrichtungen (100) der Gruppe (200) von den Detektionsvorrichtungen (100) der weiteren Gruppe (200) örtlich beabstandet sind, wobei in örtlich beanstandenden Gruppen dasselbe Kommunikationsprofil verwendet wird.

## Claims

1. A detection device (100) for detecting a physical quantity comprising:
a detector (101) for detecting a physical quantity, wherein the detector (101) is designed to output data, which represent the physical quantity;
a memory (103), in which a communication profile of the detection device (100) is stored, wherein the communication profile defines at least one predefined transmission time for sending the data, wherein the predefined transmission time is assigned to the detection device (100); and
a timer for providing a time signal, wherein the time signal indicates a time difference between a current point in time and a predefined reference point in time, wherein the timer comprises a time signal receiver, which is designed to provide a time synchronisation signal, wherein the timer is designed to change the time signal on the basis of the provided time synchronisation signal; and
a communication interface (105), which is designed to send the data at the predetermined transmission time over a communication network (401) to a predefined target network address, wherein the communication interface (105) is designed to determine the predefined transmission time for sending the data on the basis of the time signal;
wherein the communication interface (105) is designed to receive a broadcast signal from a server entity (300) over the communication network (401), wherein the broadcast signal comprises a further communication profile, wherein the further communication profile is assigned to the detection device (100), and wherein the communication interface (105) is designed to change the communication profile on the basis of the further communication profile,
wherein the detection device (100) is assigned to a group of detection devices, wherein the group of detection devices is locally distanced from a further group of detection devices, wherein the communication profile of the detection device is the same as the communication profile of a detection device of the further group of detection devices.

2. The detection device (100) according to claim 1, wherein the detector (101) is designed to determine a temperature, a humidity, an energy, an output, a position, a speed, an acceleration, an angle, an angular speed, an angular acceleration, a number of revolutions, a force, a torque, an energy consumption, a water consumption, a heat consumption or a fuel consumption as a physical quantity.

3. The detection device (100) according to one of the preceding claims, wherein the predefined transmission time defines a beginning of a free transmission time slot, wherein the free transmission time slot comprises a predefined transmission time slot duration, and wherein the communication interface (105) is designed to send the data within the free transmission time slot.

4. The detection device (100) according to one of the preceding claims, wherein the time signal receiver is a DCF77 receiver.

5. The detection device (100) according to one of the preceding claims, wherein the communication network (401) comprises a plurality of sub-networks, and wherein the communication interface (105) is designed to send the data over a sub-network of the plurality of sub-networks to the predefined target network address.

6. A group (200) of detection devices (100) according to one of claims 1 to 5, wherein each detection device (100) has a predefined transmission time for sending data assigned to it, and wherein the predefined transmission times differ from one another.

7. A communication system (400), comprising:
a group (200) and a further group (200) of detection devices (100) according to one of claims 1 to 5, wherein each detection device (100) of the group (200) and the further group (200) has a predefined transmission time for sending data within a sending interval assigned to it, and wherein the predefined transmission times differ from one another; and
a server entity (300) for communicating with each detection device (100) of the group (200) over a communication network (401) and a further server entity (300) for communicating with each detection device (100) of the further group (200) over the communication network (401), each with:
a processor (301), which is designed to determine a further communication profile of a detection device (100), wherein the further communication profile is assigned to the detection device (100), and to generate the broadcast signal, wherein the broadcast signal comprises the further communication profile; and
a communication interface (303), which is designed to send the broadcast signal over the communication network (401) to the detection device (100),
wherein the detection devices (100) of the group (200) are locally distanced from the detection devices (100) of the further group (200), wherein the same communication profile is used in locally distanced groups.

8. The communication system (400) according to claim 7, wherein the communication network (401) comprises a sub-network and a further sub-network, wherein the group (200) of detection devices (100) and the server entity (300) are assigned to the sub-network, and wherein the further group (200) of detection devices (100) and the further server entity (300) are assigned to the further sub-network.

9. A method (500) for detecting a physical quantity using a detection device (100) in a communication system according to one of claims 7 to 8, wherein the detection device (100) comprises a detector (101), a memory (103), a timer, and a communication interface (105), wherein the timer comprises a time signal receiver, wherein a communication profile of the detection device (100) is stored in the memory (103), wherein the communication profile defines at least one predefined transmission time for sending data, wherein the predefined transmission time is assigned to the detection device (100), comprising:
the physical quantity is detected (501) by the detector (101) ;
the data representing the physical quantity is output (503) by the detector (101);
a time signal is provided by the timer, wherein the time signal indicates a time difference between a current point in time and a predefined reference point in time;
a time synchronisation signal is provided by the time signal receiver;
the time signal is changed on the basis of the time synchronisation signal provided by the timer;
the predefined transmission time for sending the data is determined by the communication interface (105) on the basis of the time signal;
the data is sent (505) by the communication interface (105) at a predefined transmission time over a communication network (401) to a predefined target network address;
the communication interface (105) receives a broadcast signal from a server entity (300) over the communication network (401), wherein the broadcast signal comprises a further communication profile, wherein the further communication profile is assigned to the detection device (100); and
the communication interface (105) changes the communication profile on the basis of the further communication profile;
wherein the detection devices (100) of the group (200) are locally distanced from the detection devices (100) of the further group (200), wherein the same communication profile is used in locally distanced groups.

## Revendications

1. Dispositif de détection (100) pour détecter une grandeur physique avec :
un détecteur (101) pour détecter la grandeur physique, sachant que le détecteur (101) est constitué pour sortir des données, lesquelles représentent la grandeur physique,
une mémoire (103) dans laquelle est déposé un profil de communication du dispositif de détection (100), sachant que le profil de communication définit au moins un moment d'émission prédéterminé pour émettre des données, sachant que le moment d'émission prédéterminé est attribué au dispositif de détection (100) et
un rythmeur pour fournir un signal de temps, sachant que le signal de temps indique une différence de temps entre un moment présent et un moment de référence prédéterminé, sachant que le rythmeur comprend un récepteur de signal horaire, lequel est constitué pour fournir un signal de synchronisation de temps, sachant que le rythmeur est constitué pour modifier le signal de temps sur la base du signal de synchronisation de temps fourni et
une interface de télécommunication (105), laquelle est constituée pour émettre les données au moment d'émission prédéterminé par un réseau de communication (401) à une adresse de réseau ciblée prédéterminée, sachant que l'interface de communication (105) est constituée pour déterminer le moment d'émission prédéterminé pour émettre des données sur la base du signal de temps,
sachant que l'interface de télécommunication (105) est constituée pour recevoir un signal de diffusion d'une entité de serveur (300) par le biais du réseau de communication (401), sachant que le signal de diffusion comprend un autre profil de communication, sachant que l'autre profil de communication est attribué au dispositif de détection (100) et sachant que l'interface de télécommunication (105) est constituée pour modifier le profil de communication sur la base de l'autre profil de communication,
sachant que le dispositif de détection (100) est attribué à un groupe de dispositifs de détection, sachant que le groupe de dispositifs de détection est localement à distance d'un autre groupe de dispositifs de détection, sachant que le profil de communication du dispositif de détection est le même que le profil de communication d'un dispositif de détection de l'autre groupe de dispositifs de détection.

2. Dispositif de détection (100) selon la revendication 1, sachant que le détecteur (101) est constitué pour déterminer une température, une humidité, une énergie, une puissance, une position, une vitesse, une accélération, un angle, une vitesse angulaire, une accélération angulaire, un nombre de tours, une force, un couple, une consommation d'énergie, une consommation d'eau, une consommation de chaleur ou une consommation de carburant en tant que grandeur physique.

3. Dispositif de détection (100) selon l'une quelconque des revendications précédentes, sachant que le moment d'émission prédéterminé définit un début d'un intervalle de temps d'émission libre, sachant que l'intervalle de temps d'émission libre comporte une durée d'intervalle de temps d'émission prédéterminé et sachant que l'interface de télécommunication (105) est constituée pour émettre les données à l'intérieur de l'intervalle de temps d'émission libre.

4. Dispositif de détection (100) selon l'une quelconque des revendications précédentes, sachant que le récepteur de signal horaire est un récepteur DCF77.

5. Dispositif de détection (100) selon l'une quelconque des revendications précédentes, sachant que le réseau de communication (401) comprend une pluralité de sous-réseaux et sachant que l'interface de télécommunication (105) est constituée pour émettre les données par le biais d'un sous-réseau de la pluralité de sous-réseaux à l'adresse de réseau ciblée prédéterminée.

6. Groupe (200) de dispositifs de détection (100) selon l'une quelconque des revendications 1 à 5, sachant qu'un moment d'émission prédéterminée est attribué à chaque dispositif de détection (100) pour émettre des données et sachant que les moments d'émission prédéterminés sont différents.

7. Système de communication (400) avec :
un groupe (200) et un autre groupe (200) de dispositifs de détection (100) selon l'une quelconque des revendications 1 à 5, sachant qu'un moment d'émission prédéterminé est attribué à chaque dispositif de détection (100) du groupe (200) et de l'autre groupe (200) pour émettre des données à l'intérieur d'un intervalle d'émission et sachant que les moments d'émission prédéterminés sont différents et
une entité de serveur (300) pour communiquer avec chaque dispositif de détection (100) du groupe (200) par un réseau de communication (401) et une autre entité de serveur (300) pour communiquer avec chaque dispositif de détection (100) de l'autre groupe (200) par le réseau de communication (401) avec respectivement :
un processeur (301), lequel est constitué pour déterminer un autre profil de communication d'un dispositif de détection (100), sachant que l'autre profil de communication est attribué au dispositif de détection (100) et produire le signal de diffusion, sachant que le signal de diffusion comprend l'autre profil de communication et
une interface de télécommunication (303), laquelle est constituée pour émettre le signal de diffusion par le réseau de communication (401) au dispositif de détection (100),
sachant que les dispositifs de détection (100) du groupe (200) des dispositifs de détection (100) de l'autre groupe (200) sont localement à distance, sachant que le même profil de communication est utilisé dans les groupes localement à distance.

8. Système de communication (400) la revendication 7, sachant que le réseau de communication (401) comprend un sous-réseau et un autre sous-réseau, sachant que le groupe (200) des dispositifs de détection (100) et l'entité de serveur (300) sont attribués au sous-réseau et sachant que l'autre groupe (200) de dispositifs de détection (100) et l'autre entité de serveur (300) sont attribués à l'autre sous-réseau.

9. Procédé (500) de détection d'une grandeur physique en utilisant un dispositif de détection (100) dans un système de communication selon l'une quelconque des revendications 7 à 8, sachant que le dispositif de détection (100) comprend un détecteur (101), une mémoire (103), un rythmeur et une interface de télécommunication (105), sachant que le rythmeur comprend un récepteur de signal horaire, sachant qu'un profil de communication du dispositif de détection est déposé dans la mémoire (103), sachant que le profil de communication définit au moins un moment d'émission prédéterminé pour émettre des données, sachant que le moment d'émission prédéterminé est attribué au dispositif de détection (100), avec :
détection (501) de la grandeur physique par le détecteur (101),
sortie (503) des données par le détecteur (101), lesquelles représentent la grandeur physique,
fourniture d'un signal de temps par le rythmeur, sachant que le signal de temps indique une différence de temps entre un moment présent et un moment de référence prédéterminé,
fourniture d'un signal de synchronisation de temps par le récepteur de signal horaire,
modification du signal de temps par le rythmeur sur la base du signal de synchronisation de temps fourni,
détermination du moment d'émission prédéterminé pour émettre des données sur la base du signal de temps par l'interface de télécommunication (105),
émission (505) des données au moment d'émission prédéterminé par un réseau de communication (401) à une adresse de réseau ciblée prédéterminée par l'interface de télécommunication (105),
réception d'un signal de diffusion d'une entité de serveur (300) par le biais du réseau de communication (401) par l'interface de télécommunication (105), sachant que le signal de diffusion comprend un autre profil de communication, sachant que l'autre profil de communication est attribué au dispositif de détection (100) et
modification du profil de communication sur la base de l'autre profil de communication par l'interface de télécommunication (105),
sachant que les dispositifs de détection (100) du groupe (200) des dispositifs de détection (100) de l'autre groupe (200) sont localement à distance, sachant que le même profil de communication est utilisé dans les groupes localement à distance.
